# NEUE EUROPÄISCHE PATENTSCHRIFT

(11) **EP 0 082 407 B2**
(45) Veröffentlichungstag und Bekanntmachung des Hinweises auf die Entscheidung über den Einspruch: **24.05.1995**
(45) Hinweis auf die Patenterteilung: 15.02.1989
(21) Anmeldenummer: 82111339.6
(22) Anmeldetag: 07.12.1982
(51) Int. Cl.: C08L 23/08, C08K 3/22

(54) **Thermoplastische, flexible Polymermischung**
Thermoplastic, flexible mix of polymers
Mélange thermoplastique flexible de polymères

(30) Priorität: 22.12.1981 DE 3150798
(43) Veröffentlichungstag der Anmeldung: 29.06.1983
(73) Patentinhaber: Ivanfy, Bartholomeus, Dipl.-Ing., D-45479 Mülheim an der Ruhr (DE); Mayer, Hans-Anton, Dipl.-Ing., Beaumaris Melbourne Victoria 3193 (AU); Parmar, Daljit-Singh, Dipl.-Ing., 45134 Essen (DE)
(72) Erfinder: Ivanfy, Bartholomeus, Dipl.-Ing., D-4330 Mülheim/Ruhr (DE); Mayer, Hans-Anton, Dipl.-Ing., Melbourne Victoria 3193 (AU); Muno, Wilhelm, D-4100 Duisberg (DE); Parmar, Daljit-Singh, Dipl.-Ing., D-4300 Essen 1 (DE)
(74) Vertreter: Goodwin, Mark

(56) Entgegenhaltungen:
- EP-A- 0 054 424
- CA-A- 775 729
- DE-A- 2 849 940
- DE-B- 2 262 126
- FR-A- 2 189 437
- FR-A- 2 442 259
- GB-A- 2 041 960
- US-A- 3 267 083
- US-A- 3 827 997
- US-A- 3 832 326
- US-A- 4 083 824
- Prospekt "Vamac", Fa. Dupont, Febr. 1981, Bull. Ref. No EA 710.1, Stock No E 17762 , Seiten 1-7

## Beschreibung

Die Erfindung bezieht sich auf eine thermoplastische, flexible Polymermischung der im Oberbegriff des Anspruchs 1 bezeichneten und nach der DE-AS-2 262 126 bekannten Art.

Im bekannten Fall werden die Füllstoffe vor dem Einbringen in die Polymermischung mit einer ungesättigten Carbonsäure umgesetzt. Dabei entstehen Stoffe relativ hoher Steifigkeit, die für gummiartig flexible Güter, insbesondere für Kabelumhüllungen, nicht brauchbar sind. Bei einem sehr hohen Anteil an mineralischen Füllstoffen, wie er bei Halogenfreiheit zur Erzielung einer ausreichenden Flammwidrigkeit erforderlich ist, weisen die bekannten Mischungen im thermoplastischen Zustand eine zu geringe Zerreißfestigkeit auf, so daß eine aufwendige Vernetzung erforderlich ist. Doch selbst dann ergeben sich keine ausreichenden Festigkeitswerte. Darüberhinaus ergeben sich bei der Extrusion der bekannten hoch gefüllten Mischungen, beispielsweise für Kabelumhüllungen, Schwierigkeiten, weil eine genügend homogene Vermischung der Bestandteile bei akzeptabler Fertigungsgeschwindigkeit nicht erreichbar ist.

Aus der FR-A-2 189 437 ist ein Polyolefin-Kunststoff bekannt, der mit einem anorganischen Füllstoff vermischt wird, wobei der Kunststoff bis zu maximal 70 Prozent Füllstoff aufnehmen kann, ohne brüchig zu werden. Zur Herstellung des Kunststoffs geeignete Homopolymere und Copolymere von Vinylmonomeren sind solche mit polaren Gruppen wie Acrylsäure, Acrylate, Methacrylsäure, Methacrylate, Styrol, Acrylamid, Vinylchlorid oder dergleichen, sowie Copolymere dieser Vinylmonomeren und eines α-Olefins.

Zur Herstellung einer innigen Verbindung von organischer und anorganischer Komponente wird eine frische Oberfläche des anorganischen Füllstoffes benötigt, die durch dessen Zerkleinern hergestellt wird. Die nicht näher bezeichneten freien Radikale werden also auf mechanischem Wege erzeugt.

Der wesentliche Nachteil der nach dieser Methode hergestellten Gegenstände ist ihre mangelnde Flexibilität und Dehnbarkeit bereits bei Füllmengen von 60 Gewichtsprozent des anorganischen Füllstoffes (maximal 27 Prozent Dehnung).

Der Erfindung liegt deshalb die Aufgabe zugrunde, eine zur Erzielung sehr guter Flammwidrigkeit extrem hoch mit mineralischen fullstoffen gefüllte Polymermischung der eingangs genannten Art zu finden, welche auch ohne Vernetzung die beispielsweise für Kabelumhüllungen erforderlichen mechanischen Festigkeitswerte einschließlich guter Wärmedruckfestigkeit ermöglicht, gut verarbeitbar ist, im Brandfall nicht tropft und dabei für eine gewisse Notlaufzeit eine gute mechanische Konsistenz behält.

Die Lösung gelingt durch die im Anspruch 1 gekennzeichneten Merkmale.

Diese mineralisch hoch gefüllten thermoplastischen Polymermischungen weisen Eigenschaften auf, welche man bisher nicht einmal bei Vernetzung erreichen zu können glaubte. Dabei werden folgende werte erreicht:
- hervorragende Flammwidrigkeit, welche sogar erheblich besser als bei Polyvinylchlorid (PVC) ist und eine wesentlich geringere Lichtabsorbtion
- sehr raucharm und bildet im Brandfall keine korrosiven Gase
- hoher Oxygen-Index, LOI-Werte > 40, in der Regel 45 - 50
- tropft nicht im Brandfall, selbst ohne Vernetzung
- mechanisch fest (> 8 N/mm²)
- flexibel
- wärmedruckfest
Gegenstand der Erfindung ist eine thermoplastische, halogenfreie, flammwidrige Polymermischung, welche insbesondere für Kabelumhüllungen verwendbar ist. Sie wird wie folgt angesetzt:
Elastomerkomponente aus Äthylencopolymer oder Äthylenterpolymer mit mindestens 38 % Comonomeranteil und einer mindestens 70 % einpolymerisiertes Äthylenmonomer enthaltenden Plastomerkomponente, wobei, bezogen auf das Gewicht der gesamten Polymeranteile, der Anteil der Elastomerkomponente mindestens 15 % und der Anteil der Plastomerkomponenten 40 % bis 85 % beträgt. Diese Polymermischung wird mit einer mindestens ein Metallhydroxyd enthaltenden mineralischen Füllung von 180 % bis 320 % des Gewichtes der Polymermischung sowie mit Carboxylgruppen versetzt. Die Carboxylgruppen sind in an ein Polymer gebundener Form vorhanden und in der Weise eingebracht, daß dieses Polymer 0,5 % bis 14 % Gewichtsanteile COOH-Gruppen enthält.

In Abwandlung des Gegenstandes der Erfindung enthält die Polymermischung als Comonomere ungesättigte Ester, wie beispielsweise Vinylester, Acrylester, Äthylacrylat oder Butylacrylat, welche in der Weise eingebracht sind, daß dieses Polymer 0,5 % bis 14 % Gewichtsanteile COOH-Gruppen enthält.

Eine weitere Polymermischung mit günstigen flammwidrigen Eigenschaften und ausgezeichneter Elastizität erhält man dadurch, daß der Polymermischung nach Beispiel 1 oder 2 ein weiteres Polymer mit einem Gewichtsanteil von 0,5 % bis 25 %, vorzugsweise 3 % bis 18 % der gesamten Polymermischung hinzugefügt ist, in welchem ein gebundene Carboxylgruppen enthaltendes Monomer einpolymerisiert ist.
- ermöglicht Kabelumhüllungen, welche auch im Brandfall über eine lange Zeit (> 20 Minuten) einen Notlaufbetrieb gewährleisten.

Da zur Erzielung dieser hervorragenden Eigenschaften keine Vernetzung erforderlich ist, ist die erfindungsgemäße Mischung geruchsarm.

Die erfindungsgemäße Mischung kann trotz der hohen mineralischen Füllung mit konventionellen Extrudern, wie sie beispielsweise für PVC üblich sind, verarbeitet werden. Die Bestandteile dieser Mischung sind preisgünstig in hinreichender Menge erhältlich. Die hervorragenden Eigenschaften ergeben sich also ohne Verwendung teurer Polymerbestandteile und insbesondere ohne Vernetzung. Dabei kann selbstverständlich eine Vernetzung durchgeführt werden, wenn bei extremen Anforderungen an die mechanische Festigkeiten noch günstigere Eigenschaften insbesondere im Brandfall gewünscht werden. Die erfindungsgemäßen Mischungen können mittels geeigneter Zusätze oder durch Gaseinbringung verschäumt werden.

Der entscheidende Lösungsgedanke der Erfindung ist, daß freie Carboxylgruppen enthaltende Verbindungen vor der Einbringung der Füllstoffe und vor der Herstellung der Mischung, durch Einpolymerisation in einem bzw. an eines der Polymerbestandteile gebunden werden, so daß ein Co- bzw. Terpolymer mit -COOH-Gruppen entsteht.

Diese Carboxylgruppen enthaltenden Verbindungen sind in einer solchen henge hinzugefügt, daß sie mit den Füllstoffen, insbesondere mit den als Kationen vorliegenden Bestandteilen der mineralischen Füllstoffe, reagieren.

Kationen können vorteilhafterweise auch vor Herstellung der Polymermischung der Polymerkomponente zugegeben werden.

Die in dem oder den Polymerbestandteilen des Polymergemisches fest an die Polymerketten gebundenen Carboxylgruppen (-COOH) können bei oder nach Herstellung der Gesamtmischung mit den mineralischen Komponenten reagieren und Bindungen zwischen Polymer und Füllstoff schaffen.

Diese Wirkung wird bei "gecoateten", d. h. vorher mit kurzkettigen organischen Säuren behandelten Füllstoffen, wie in der vorbekannten Lösung geschildert, nicht erreicht, da diese Säuren nicht an die Polymerketten gebunden sind und auch später nicht mehr so gebunden werden. Es ergeben sich steife, unflexible Mischungen.

Durch die erfindungsgemäße, feste chemische Bindung in bzw. an die Polymerkette bzw. Polymerphase einerseits und die anschließenden Verbindungen mit den Füllstoffen, ergibt sich eine für solche Compounds hohe mechanische Festigkeit.

Die polymergebundenen, freie Carboxylgruppen enthaltenden Verbindungen bzw. Polymere können mit anderen Polymeren vorgemischt sein, oder bei der Herstellung der fertigen Polymermischung mit den anderen Polymeren und den Füllstoffen in eine Mischanlage gegeben werden.

Vorteilhaft ist eine Temperatur von 100 - 120°C bei der genannten Vermischung und Verbindung der verschiedenen Phasen.

Wichtig zur Lösung der der Erfindung zugrunde liegenden Aufgabe ist weiterhin, daß plastomere und elastomere Polymerbestandteile im angegebenen Verhältnis vorhanden sein müssen. Durch eine Variation des Verhältnisses dieser Bestandteile in Rahmen des erfindungsgemäß angegebenen Bereichs lassen sich bestimmte Eigenschaften bevorzugt verbessern, ohne daß die übrigen Eigenschaften wesentlich verschlechtert werden.

Es hat sich gezeigt, daß es vorteilhaft und wirtschaftlich ist, Carboxylgruppen enthaltende monomere Verbindungen in ein Terpolymer der Elastomerbestandteile einzubringen bzw. bei deren Polymerisation mit einzupolymerisieren. Es ist auch besonders vorteilhaft, den plastomeren und elastomeren Bestandteilen ein Weiteres Copolymer hinzufügen, in welches Carboxylgruppen enthaltende monomere Verbindungen einpolymerisiert sind.

Die Füllstoffe enthalten vorteilhaft in kationischer Form vorliegende Matallatome, insbesondere Mg, Al, Na, Ca oder Zn, während die Polymere vornehmlich Kationen auf der Basis von Na, K, Mg oder Zn enthalten. Gute Ergebnisse wurden erizielt, wenn der Anteil der in kationischer Form vorliegenden Metalle mehr als 1 %, vorzugsweise mindestens 3 % des Gewichtes des die Carboxylgruppen enthaltenden Polymers beträgt.

Die mineralischen Füllstoffe sollten mindestens 70 % insbesondere elektrolytarme Metallhydroxyde enthalten. Als restliche Bestandteile kann Magnesiumoxyd hinzugegeben werden, welches synergistisch mit Aluminiumhydroxyd einen höheren Oxygen-Index ermöglicht.

Weiterhin ist es vorteilhaft, im Brandfall Inertgas abspaltende Stoffe wie Metallkarbonate, insbesondere Magnesiumkarbonat, hinzuzufügen. Darüberhinaus ist auch der Zusatz von Kaolin erlaubt.

## Patentansprüche

1. Thermoplastische, halogenfreie, flammwidrige Polymermischung, insbesondere für Kabelumhüllungen, mit 100 Gewichtsanteilen von Polymeren und 180 bis 320 Gewichtsanteilen einer mineralischen Füllung, welche mindestens ein Metallhydroxid enthält, sowie mit Carboxylgruppen, wobei
- mindestens 15 Gewichtsanteile der Polymeren aus elastomeren Komponenten auf der Basis von Ethylen-Copolymer oder Ethylen-Terpolymer mit höchstens 62 Gewichts-% Ethylen und mindestens 38 Gewichts-% Comonomeren, und
- 40 bis 85 Gewichtsanteile der Polymeren aus plastomeren Komponenten mit mindestens 70 Gewichts-% einpolymerisiertem Ethylen und weiteren Comonomeren bestehen,
dadurch gekennzeichnet, daß die elastomeren oder plastomeren Komponenten 0,5 bis 14 Gewichts-% polymergebundene Carboxylgruppen enthalten.

2. Polymermischung nach Anspruch 1, dadurch gekennzeichnet, daß die Comonomere ungesättigte Ester sind, wie beispielsweise Vinylester, Acrylester, Äthylacrylat oder Buthylacrylat.

3. Polymermischung nach Anspruch 1 oder 2, dadurch gekennzeichnet, daß die Carboxylgruppen in einem Terpolymer der Elastomergruppe enthalten sind.

4. Polymermischung nach Anspruch 1 oder 2, dadurch gekennzeichnet, daß der Polymermischung ein Polymer mit einem Gewichtsanteil von 0,5% bis 25 % vorzugsweise 3 % bis 18 % der gesamten Polymermischung hinzugefügt ist, in welchem ein Carboxylgruppen enthaltendes Monomer einpolymersiert ist.

5. Polymermischung nach einem der Ansprüche 1 bis 4, dadurch gekennzeichnet, daß die Füllstoffe in kationischer Form vorliegende Metallatome, insbesondere Mg, Al, Na, Ca, oder Zn enthalten, mit denen die die Carboxylgruppen enthaltenden Polymere ionisch verbunden sind.

6. Polymermischung nach einem der Ansprüche 1 bis 5, dadurch gekennzeichnet, daß die Carboxylgruppen enthaltenden Polymere in kationischer Form vorliegende Metallatome enthalten, insbesondere Na, K, Mg oder Zn, mit denen sie ionisch verbunden sind.

7. Polymermischung nach Anspruch 6, dadurch gekennzeichnet, daß der Anteil der Kationen mindestens 1 %, vorzugsweise mindestens 3 % des Gewichtes des die Carboxylgruppen enthaltenden Polymere beträgt.

8. Polymermischung nach einen der Ansprüche 1 bis 7, dadurch gekennzeichnet, daß die mineralische Füllung mindestens 70 % insbesondere elektrolytarme Metallhydroxyde enthält.

9. Polymermischung nach Anspruch 8, dadurch gekennzeichnet, daß die mineralische Füllung als Bestandteil Metalloxyde wie Magnesiumoxyd enthält.

10. Polymermischung nach Anspruch 8 oder 9, dadurch gekennzeichnet, daß in der mineralischen Füllung als bestandteile im Brandfall Inertgas abgebende Stoffe wie Metallkarbonate, insbesondere Magnesiumkarbonate, enthalten sind.

11. Polymermischung nach einem der Ansprüche 7 bis 10, dadurch gekennzeichnet, daß die mineralische Füllung als Bestandteil Kaolin enthält.

## Claims

1. A thermoplastic, halogen-free, flame-resistant polymer mixture, particularly for cable coating, containing 100 parts per weight polymer and from 180 parts to 320 parts per weight mineral filler, said filler containing at least one metal hydroxide and also having carboxyl groups, wherein
at least 15 parts per weight of the polymer comprise elastomer components based on ethylene copolymer or ethylene terpolymer comprising maximum 62% by weight ethylene and at least 38% by weight comonomers, and
40 parts to 85 parts per weight of the polymer comprise plastomer components comprising at least 70% by weight polymerised ethylene and additional comonomers,
characterised in that the elastomer or plastomer components contain from 0.5% to 14% by weight carboxyl groups bonded to polymer.

2. A polymer mixture according to claim 1, characterised in that the comonomers are unsaturated esters such as vinyl ester, acrylic ester, ethyl acrylate or butyl acrylate for example.

3. A polymer mixture according to claim 1 or 2, characterised in that the carboxyl groups are contained in a terpolymer of the elastomer group.

4. A polymer mixture according to claim 1 or 2, characterised in that added to the polymer mixture there is a further polymer which has a proportion by weight of 0.5% to 25%, preferably 3% to 18% of the whole polymer mixture and in which a monomer containing a carboxyl group is incorporated during the polymerisation.

5. A polymer mixture according to any one of claims 1 to 4, characterised in that the fillers contain metal atoms present in cationic form, particularly Mg, Al, Ca or Zn, with which the polymers containing carboxyl groups are ionically combined.

6. A polymer mixture according to any one of claims 1 to 5, characterised in that the polymers containing the carboxyl groups contain metal atoms present in cationic form, particularly Na, K, Mg or Zn, with which they are ionically combined.

7. A polymer mixture according to claim 6, characterised in that the proportion of cations amounts to at least 1%, preferably at least 3% of the weight of the polymers containing the carboxyl groups.

8. A polymer mixture according to any one of claims 1 to 7, characterised in that the mineral filling contains at least 70% of metallic hydroxides, particularly metallic hydroxides low in electrolytes.

9. A polymer mixture according to claim 8, characterised in that the mineral filling contains metallic oxides such as magnesium oxide as a component.

10. A polymer mixture according to claim 8 or 9, characterised in that the substances giving off inert gas in the event of fire, such as metallic carbonates, particularly magnesium carbonates, are contained in the mineral filling as components.

11. A polymer mixture according to any one of claims 7 to 10, characterised in that the mineral filling contains kaolin as a component.

## Revendications

1. Mélange thermoplastique de polymères exempt d'halogène, ignifuge, en particulier pour gaines de câbles, comportant 100 parties en poids de polymères et 180 à 320 parties en poids d'une charge minérale contenant au moins un hydroxyde métallique, ainsi que des groupes carboxyle où
- au moins 15 parties en poids des polymères représentent des constituants élastomères à base de copolymère de l'éthylène ou de terpolymère de l'éthylène présentant au plus 62% en poids d'éthylène et au moins 38% en poids de comonomères, et
- 40 à 85 parties en poids des polymères représentent des constituants plastomères présentant au moins 70% en poids de monomères éthylènes copolymérisés ainsi que d'autres comonomères,
caractérisé en ce que les constituants élastomères ou plastomères contiennent de 0,5 à 14% en poids de groupes carboxyle greffés au polymère.

2. Mélange de polymères selon la revendication 1, caractérisé en ce que les comonomères sont des esters insaturés tels que par exemple des esters vinyliques, des esters acryliques, acrylate d'éthyle ou acrylate de butyle.

3. Mélange de polymères selon la revendication 1 ou 2, caractérisé en ce que les groupes carboxyle sont contenus dans un terpolymère du groupe des élastomères.

4. Mélange de polymères selon la revendication 1 ou 2, caractérisé en ce que l'on ajoute au mélange de polymères un polymère dans lequel est copolymérisé un monomère contenant des groupes carboxyle, dans une proportion pondérale de 0,5 à 25%, de préférence de 3 à 18% du mélange total de polymères.

5. Mélange de polymères selon l'une quelconque des revendications 1 à 4, caractérisé en ce que les charges contiennent des atomes métalliques présents sous forme cationique, en particulier Mg, Al, Na, Ca ou Zn, avec lesquels les polymères contenant les groupes carboxyle sont liés par liaison ionique.

6. Mélange de polymères selon l'une quelconque des revendications 1 à 5, caractérisé en ce que les polymères contenant des groupes carboxyle contiennent des atomes métalliques présents sous forme cationique, en particulier Na, K, Mg ou Zn, avec lesquels ils sont liés par liaison ionique.

7. Mélange de polymères selon la revendication 6, caractérisé en ce que la proportion des cations est d'au moins 1%, de préférence au moins 3%, du poids du polymère contenant les groupes carboxyle.

8. Mélange de polymères selon l'une des revendications 1 à 7, caractérisé en ce que la charge minérale contient au moins 70% d'hydroxydes métalliques, en particulier pauvres en électrolytes.

9. Mélange de polymères selon la revendication 8, caractérisé en ce que la charge minérale contient comme constituant des oxydes métalliques tels que l'oxyde de magnésium.

10. Mélange de polymères selon la revendication 8 ou 9, caractérisé en ce que la charge minérale contient comme constituant des substances libérant un gaz inerte en cas d'incendie, en particulier des carbonates de magnésium.

11. Mélange de polymères selon l'une des revendications 7 à 10, caractérisé en ce que la charge minérale contient comme constituant du kaolin.
